# EUROPEAN PATENT APPLICATION

(11) **EP 2 009 416 A1**
(43) Date of publication of application: **31.12.2008**
(21) Application number: 07122538.7
(22) Date of filing: 06.12.2007
(51) Int. Cl.: G01M 11/00

(54) **Optical probe**

(30) Priority: 29.06.2007 US 947217 P; 31.10.2007 US 983986 P
(71) Applicant: INTERUNIVERSITAIR MICROELEKTRONICA CENTRUM VZW, 3001 Leuven (BE); Universiteit Gent, 9000 Gent (BE)
(72) Inventor: Scheerlinck, Stijn, B-9050, Ledeberg (BE); Van Thourhout, Dries, B-9000, Gent (BE); Baets, Roeland, B-9800, Deinze (BE)
(74) Representative: Sarlet, Steven Renaat Irène

(57) **Abstract**

An optical probe (10) for sending light into an optical waveguide on a substrate or for receiving light from an optical waveguide on a substrate is provided, the optical probe comprising an optical element (11) for guiding the light in a propagation direction, the optical element (11) having a facet (15) where the light enters or exits the optical element (11) and means for coupling the light between the optical element (11) and the waveguide. An optical probe (10) according to the present invention is characterized in that the light coupling means are formed on the facet (15) and comprise a diffraction structure (14). In a preferred embodiment the optical element (11) may be an optical fiber and the diffraction structure (14) may be a strong diffraction structure, e.g. a metal grating structure. When bringing the optical probe (10) in the vicinity of a waveguide on a substrate, the light that is guided by the waveguide may be diffracted into the optical element (11). Alternatively, light from the optical element (11) may be coupled into the waveguide. When using the optical probe (10) for coupling light between the optical element (11) and a waveguide, the optical probe may be positioned out of the plane of the waveguide. Furthermore a method is provided for forming an optical structure, e.g. a metal grating structure, on a facet (15) of an optical element (11).

## Description

### Field of the invention

The present invention is related to integrated optical circuits. More specifically, it is related to an optical probe for sending light into and/or receiving light from an optical waveguide on an integrated optical circuit and to a method for manufacturing such an optical probe. The optical probe may for example be used for testing the operation and performance of highly integrated optical components on a wafer scale or it may for example be used in a packaging process for integrated optical circuits. The present invention is furthermore related to a method for sending light into an optical waveguide and/or for receiving light from an optical waveguide.

### Background of the invention

There exist numerous methods to send light (e.g., light from an optical fiber) into optical waveguides and/or to receive light from optical waveguides (e.g., high-index-contrast waveguides such as Silicon-on-Insulator based waveguides). Examples of such methods are butt coupling, using a grating coupler in the circuit, using tapers in the circuit and evanescent coupling. However, each of these methods has distinct disadvantages when the coupling scheme is applied for wafer-scale testing of high-index-contrast optical components and circuits.

In the case of butt coupling, dicing through waveguides is required such that light can be coupled in or out from the side of the integrated optical circuit. However, dicing is time consuming and permanent. The effort is useless if, after testing, it turns out that the integrated optical circuit is not working. Moreover, only the whole integrated optical circuit can be tested. Testing of individual components in the optical circuit is not possible with this method.

Incorporating a grating coupler in the integrated optical circuit such that light is diffracted into or out of the waveguide is permanent. Testing of individual components is not possible using this method. The same arguments hold for the case where tapers are used.

In evanescent coupling, as described in U.S. Patent No. 6,859,587, a fiber is polished at the side such that the fiber core is exposed. The side-polished fiber is coupled to the core of a waveguide on a planar integrated optical circuit by bringing the fiber in the vicinity of the circuit, parallel to the waveguide plane. This method becomes extremely challenging for testing high-index-contrast integrated optical circuits. There is a phase mismatch between the low-index-contrast fiber mode and high-index-contrast waveguide modes. This requires introducing coupling structures in the integrated optical circuits. Moreover, the requirement to position the fiber parallel to the waveguide plane is a disadvantage, as the area needed for probing is relatively large.

### Summary of the invention

It is an aim of the present invention to provide an optical probe for sending light into an optical waveguide on a substrate, e.g. a substrate comprising an integrated optical circuit, and/or for receiving light from an optical waveguide on a substrate, e.g. a substrate comprising an integrated optical circuit, wherein the need for providing coupling structures on the substrate may be avoided.

It is a further aim of the present invention to provide a simple method for manufacturing such an optical probe or other optical elements.

These and other aims are achieved according to the invention as defined in the independent claims.

An optical probe in accordance with the present invention can be positioned out of the plane of the waveguide, such that the area needed for probing is substantially smaller than in prior art solutions. An optical probe according to the present invention enables wafer-scale testing of individual optical components of integrated optical circuits, e.g. in high-index-contrast material systems.

According to the present invention, an optical probe for sending light into an optical waveguide on a substrate or for receiving light from an optical waveguide on a substrate comprises an optical element for guiding the light in a propagation direction, the optical element having a facet (i.e. a substantially smooth surface) where the light enters or exits the optical element. Means are provided for coupling the light between the optical element and the waveguide, said light coupling means being formed on the facet and comprising a diffraction structure. It is an advantage of providing the means for coupling light between the optical element and the waveguide on the facet that the need for providing a light coupling structure on the substrate comprising the waveguide, e.g. a substrate comprising an integrated optical circuit, may be avoided. Therefore, the substrate area needed for probing may be substantially smaller than in prior art solutions, and probing of individual components in an optical circuit may be done on a wafer-scale.

The optical probe is preferably provided for being placed with the propagation direction under a predetermined angle with respect to the orthogonal to the waveguide. Said predetermined angle is preferably within the range between 0 and 30 degrees, more preferably between 0 and 10 degrees. It is an advantage of positioning the optical probe under said predetermined angle, out of the plane of the waveguide, that the area needed for probing may be substantially smaller than in prior art solutions. Off-vertical positioning of the optical fiber is also advantageous for avoiding large second order diffraction back into the waveguide.

In embodiments according to the invention, the facet may extend in a plane forming said predetermined angle with the orthogonal to the propagation direction in the optical element. In this embodiment, the diffraction structure can be directly applied on the facet, without any intermediate structure.

In embodiments of the present invention, the light coupling means may comprise at least one intermediate structure in between the facet and the diffraction structure. Said at least one intermediate structure may for example comprise a polymer, the polymer being substantially transparent to the light to be coupled between the optical element and the waveguide.

In embodiments of the present invention the diffraction structure may be a structure with a high refractive index contrast, such as for example a metal grating structure. The diffraction structure may be a single grating structure or it may for example be a double grating structure. It may be a 1D grating or a 2D grating structure. The grating structure may be a periodic or a non-periodic structure. It may be curved or non-curved. Other diffraction structures are possible.

In preferred embodiments of the present invention, the optical element of the optical probe comprises an optical fiber, and the means for coupling light between the optical element and the waveguide are located on a core of the optical fiber. Other optical elements are however also possible, such as for example a light source, a laser, a waveguide or a light detector.

Furthermore the present invention provides a method for sending light into an optical waveguide on a substrate or for receiving light from an optical waveguide on a substrate, the method comprising the steps of positioning an optical probe in the vicinity of the waveguide, said optical probe comprising an optical element for guiding the light in a propagation direction, the optical element having a facet where the light enters or exits the optical element, means being provided for coupling the light between the optical element and the waveguide, said light coupling means being formed on the facet and comprising a diffraction structure; and orienting the optical probe such that the diffraction structure extends substantially parallel to and at a predetermined distance from the waveguide. The predetermined distance between the diffraction structure and the waveguide may for example be chosen as a function of the required coupling efficiency and may for example be in the range between 0 nm and 100 nm. However, depending on the kind of diffraction structure, the material system, and the required coupling efficiency, larger distances between the diffraction structure and the waveguide may be used.

Orienting the optical probe may comprise orienting the optical probe with the propagation direction under a predetermined angle with respect to the orthogonal to the waveguide. Said predetermined angle may for example be in the range between 0 and 30 degrees, more preferably 0 and 10 degrees but other angles are possible.

An optical probe according to the present invention and the method for sending light into an optical waveguide or for receiving light from an optical waveguide according to the present invention may for example be used for testing optical components, e.g. individual optical components, on an integrated optical circuit (e.g. for wafer-scale testing of optical components) or for example in a process for coupling an optical element to a waveguide in a packaging process for integrated optical circuits or for coupling an optical element such as for example a light source or a light detector to a waveguide on a substrate.

The present invention furthermore provides a method for forming an optical structure, e.g. a patterned structure such as for example a diffraction structure with a high refractive index contrast, e.g. a metal grating structure, on a facet of an optical element. More in particular, the present invention provides a method for forming, on a facet of a core of an optical element, an optical structure from a light curable material (e.g. a polymer) and possibly a layer of a material, e.g. a metal. The method comprises the steps of: providing a light curable material in liquid form on a surface of a carrier, positioning the optical element above the carrier, with the facet sufficiently close to the surface of the carrier, such that the liquid material substantially fills the space between the surface and the facet; curing the liquid material for forming the optical structure by means of light which is applied via the core of the optical element; and separating the optical element with the optical structure from the carrier. By applying the light through the core of the optical element, the liquid material is only cured at the core, so undesirable side portions of the optical structure which would otherwise be created sideways from the core can be avoided. It is thus an advantage of providing the light for curing the liquid material through the optical element that a self-aligned process for forming the optical structure, e.g. diffraction structure, on the facet may be obtained.

When a layer of material, e.g. metal is to be applied on the surface of the optical element, this material is first applied on the carrier before providing the light curable material and transferred to the optical element upon separating the optical element from the carrier. The layer of the material, e.g. metal, may be a non-patterned layer or it may be a patterned layer, e.g. a patterned layer comprising sub-micron features. The surface of the carrier may be a flat surface or it may comprise recessed areas and raised areas, e.g. for forming on the facet a structured polymer with recessed areas (at locations corresponding to the raised areas of the carrier) and raised areas (at locations corresponding to the recessed areas of the carrier). The layer of the material, e.g. metal, may for example only be present in the recessed areas of the carrier, or it may be present both in the recessed areas and on the raised areas of the carrier. It is preferred that the adhesion between the structure and the surface of the carrier is weaker than the adhesion between the structure and the facet. Furthermore, it is preferred that the adhesion between the material, e.g. metal, and the carrier is weaker than the adhesion between the material, e.g. metal, and the structure. In embodiments of the present invention the carrier may for example have an anti-sticking layer on the surface.

In embodiments of the present invention the liquid material provided on the surface of the carrier may for example be a UV-curable material, and curing the liquid material for forming the polymer may comprise illuminating the liquid material with UV light. The UV-light for curing the liquid material is provided through the optical element, e.g. through the core of an optical fiber. In embodiments of the present invention, curing the liquid material for forming the polymer may also comprise performing a thermal treatment of the liquid material or it may comprise a combination of thermal treatment and UV curing.

In embodiments of the present invention, positioning the optical element may comprise orienting the optical element such that the facet is substantially parallel to the carrier or it may comprise orienting the optical element such that the facet forms a non-zero angle with the surface of the carrier.

It is an advantage of a method according to the present invention for forming a structure on a facet of an optical element that a low cost fabrication method may be obtained without the need for metal lift-off or metal etching. It is an advantage of the method according to the present invention that the number of processing steps needed for forming a pattern on a facet is low as compared to prior art solutions. More in particular, it is an advantage that the number of processing steps involving handling of the optical element is substantially reduced as compared to prior art solutions.

The subject matter regarded as invention is particularly pointed out and distinctively claimed in the claim section concluding this document. The invention however, both as to organization and method of operation, together with features and advantages thereof, may best be understood by reference to the following detailed description when read with the accompanying drawings.

### Brief description of the drawings

Figure 1 shows a view on the facet and a side view (cross section) of an optical probe comprising an optical fiber with a diffraction grating on the fiber facet according to an embodiment of the present invention.
Figure 2 is a schematic representation of a wafer comprising a plurality of integrated optical circuits, each containing various optical components or devices interconnected by waveguides.
Figure 3 shows a scheme for testing a single optical component or device on a chip, using two optical probes in accordance with an embodiment of the present invention.
Figure 4 shows the simulated coupling efficiency between an optical probe comprising a metal grating and a silicon waveguide as a function of the wavelength, for increasing distance between the metal grating and the waveguide.
Figure 5a shows measurement results and simulation results of the coupling efficiency between a single mode fiber and an SOI waveguide, wherein light is diffracted by a gold grating in the vicinity of the waveguide. The grating is separated from the top silicon layer by a 50 nm thick aluminum oxide layer. The grating has a period of 600 nm, a thickness of 40 nm and a footprint of 10 µm x 10 µm.
Figure 5b shows a cross section of the structure used for performing measurements of the coupling efficiency between a single mode fiber and an SOI waveguide wherein light is diffracted by a grating in the vicinity of the waveguide.
Figure 6 is a schematic representation of the 2D model used for performing simulations.
Figure 7 shows the simulated coupling efficiency of an optical probe comprising an optical fiber with a gold grating on the fiber facet, as a function of facet angle and for increasing air gap height (20 nm, 40 nm, 60 nm, 80 nm) between the grating and the SOI waveguide.
Figure 8 shows the simulated coupling efficiency of two different optical probes as a function of the SOI buried oxide layer thickness.
Figure 9 shows the 3D-correction factor for interpreting 2D simulation results, as a function of waveguide width. The effective index of the fundamental TE mode supported by these waveguides is also shown.
Figure 10 illustrates a carrier preparation method: (a) anti-adhesion treatment; (b) metal evaporation; (c) removal of top metal layer by micro-contact; (d) final carrier ready.
Figure 11 illustrates a fabrication scheme according to embodiments of the present invention for an optical probe comprising a straight-cleaved fiber and a single metal grating.
Figure 12 shows the results of an experiment wherein a metal grating optical probe according to the present invention is used for testing the performance of an SOI microring racetrack resonator.
Figure 13 shows the results of an experiment wherein a metal grating optical probe according to the present invention is used for testing the performance of an SOI Mach-Zehnder interferometer.
Figure 14 shows the results of an experiment wherein the metal grating optical probe according to the present invention is used for testing the uniformity of SOI microrings fabricated in the same run within a die.
Figure 15 shows a fabrication scheme for optical probes comprising an optical fiber with a metal grating on the fiber facet according to an embodiment of the present invention, using UV nano-imprinting and metal lift-off.
Figure 16 shows a self-aligned fabrication scheme for optical probes comprising an optical fiber with a metal grating on the fiber facet according to an embodiment of the present invention, using UV nano-imprinting and metal etching.
Figure 17 shows a double grating diffraction structure for the fiber probe in accordance with an embodiment of the present invention.
Figure 18 illustrates a fabrication process for a fiber probe with a double grating diffraction structure.
Figure 19 illustrates fabrication processes for a fiber probe with a double grating diffraction structure.

### Detailed description of the invention

In the following detailed description, numerous specific details are set forth in order to provide a thorough understanding of the invention and how it may be practiced in particular embodiments. However it will be understood that the present invention may be practiced without these specific details. In other instances, well-known methods, procedures and techniques have not been described in detail, so as not to obscure the present invention. While the present invention will be described with respect to particular embodiments and with reference to certain drawings, the reference is not limited hereto. The drawings included and described herein are schematic and are not limiting the scope of the invention. It is also noted that in the drawings, the size of some elements may be exaggerated and, therefore, not drawn to scale for illustrative purposes.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising" used in the claims should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof.

In the context of this invention, the terms "radiation" and "light" are used for indicating electromagnetic radiation with a wavelength in a suitable range. This radiation may be electromagnetic radiation with a wavelength that is not absorbed by the materials used (e.g. the waveguide material). For example, this radiation may be electromagnetic radiation with a wavelength between 1 µm and 2 µm.

The invention will now be described by a detailed description of several embodiments of the invention. It is clear that other embodiments of the invention can be configured according to the knowledge of persons skilled in the art without departing from the true spirit or technical teaching of the invention.

An optical probe for sending light into an optical waveguide on a substrate or for receiving light from an optical waveguide on a substrate in accordance with the present invention comprises an optical element for guiding the light in a propagation direction, the optical element having a facet (i.e. a substantially smooth surface) where the light enters or exists the optical element and means for coupling the light between the optical element and the waveguide (i.e. light coupling means). An optical probe according to the present invention is characterized in that the light coupling means are formed on the facet and in that they comprise a diffraction structure. In a preferred embodiment the diffraction structure may be a strong diffraction structure (e.g., a diffraction grating structure with a high refractive index contrast (e.g., a metallic grating structure)). In case where the optical element is an optical fiber, the light coupling means may be located on the fiber facet (e.g., on the core of the fiber facet). When bringing the optical probe in the vicinity of a waveguide (e.g., a high-index-contrast waveguide, a planar waveguide on an integrated optical circuit), the light that is guided by the waveguide may be diffracted into the optical element. Alternatively, light from the optical element may be coupled into the waveguide. In the context of this invention, bringing the optical probe in the vicinity of a waveguide means that the distance between the diffraction structure of the optical probe and the waveguide is for example between 0 nm (i.e., physical contact) and 100 nm. Depending on the kind of diffraction structure, the material system, and the required coupling efficiency, larger distances between the optical probe and the waveguide may be used.

When using the optical probe according to an embodiment of the present invention for coupling light between the optical element and a waveguide, the optical probe may be out of the plane of the waveguide, i.e. the optical probe may be oriented such that the light propagation direction in the optical probe forms a non-zero angle with respect to the normal to the waveguide plane. For example, the angle between the light propagation direction in the optical probe and the normal to the plane of the waveguide may be between 0 degrees and 10 degrees. Other angles are possible as well.

In the following, the detailed description relates to optical probes wherein the optical element is an optical fiber and wherein the diffraction structure is a metal diffraction grating structure. However, the present invention is not limited thereto. The present invention more generally relates to optical probes comprising an optical element (e.g. optical fiber, light source, waveguide, light detector) with a facet, wherein means comprising a diffraction structure are provided on said facet for coupling light between the optical element and a waveguide. In the description below, the light coupling means are also indicated as "coupling structure". The description is given for silicon-on-insulator (SOI) integrated optical circuits. However, other material systems may be used.

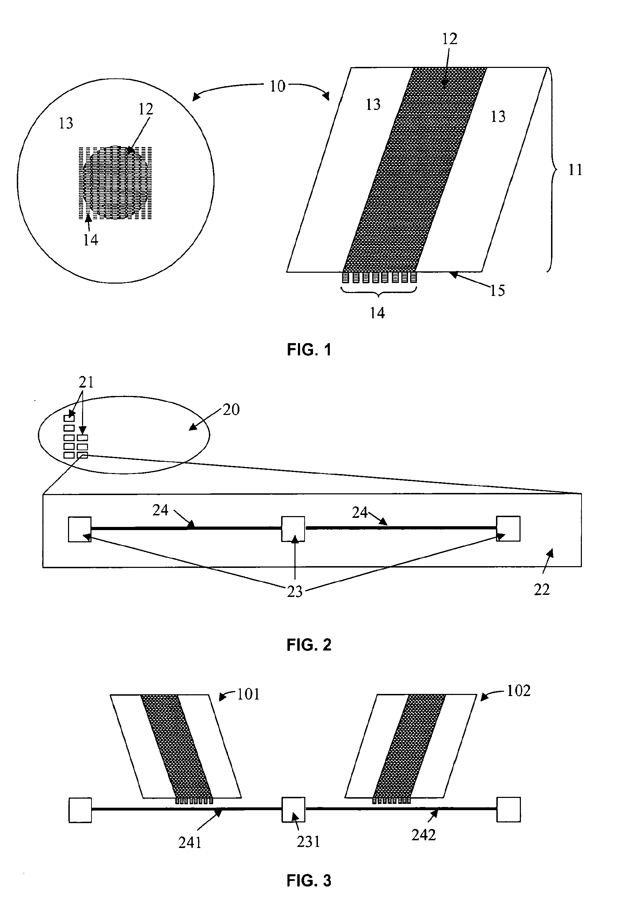

In Figure 1 a scheme of an optical probe 10 according to an embodiment of the present invention is presented. The optical probe 10 comprises an optical fiber 11 with core 12 and cladding 13, and a diffraction grating structure 14 on the fiber facet 15. In the illustration shown, the fiber facet 15 is polished at a non-zero facet angle, where the facet angle is defined as the angle between the fiber facet plane and a plane orthogonal to the central axis (wherein the central axis corresponds to the light propagation direction) of the optical fiber. In a preferred embodiment according to the present invention, the facet angle may be in the range between 0 and 10 degrees. For example, the facet angle may be in the range between 2 and 8 degrees. Other angles are possible.

The reason for using a non-zero facet angle is related to the use of the optical probe 10 for coupling light between a waveguide and an optical fiber 11, wherein the central axis of the optical fiber is at a non-zero angle with respect to the normal to the average waveguide plane. This off-vertical positioning of the optical fiber is for avoiding large second order diffraction back into the waveguide.

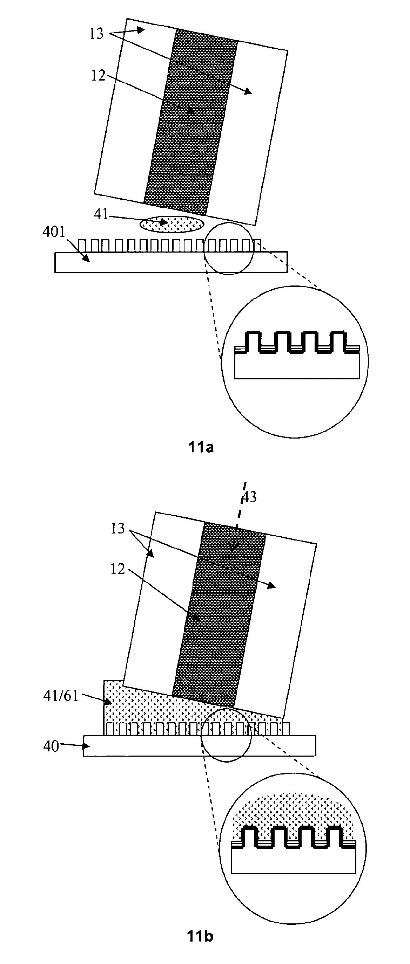

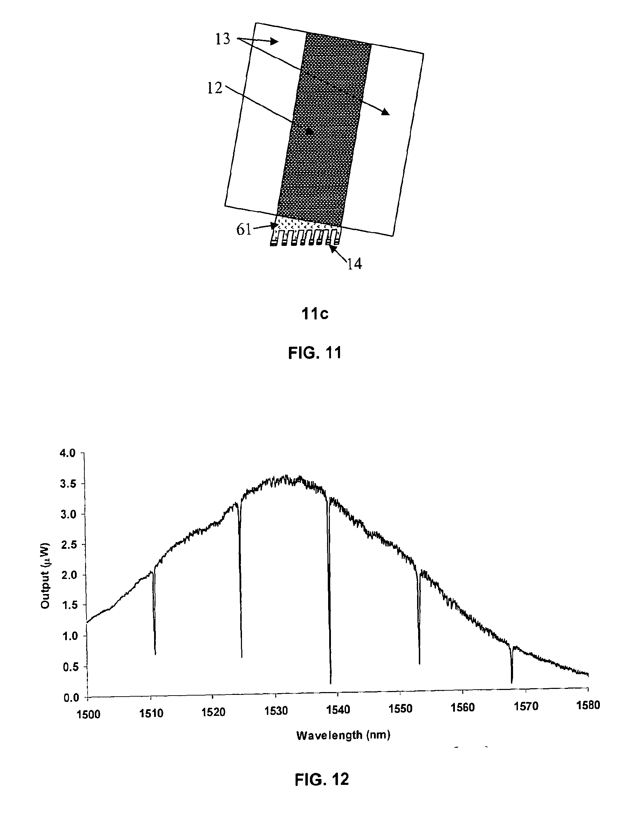

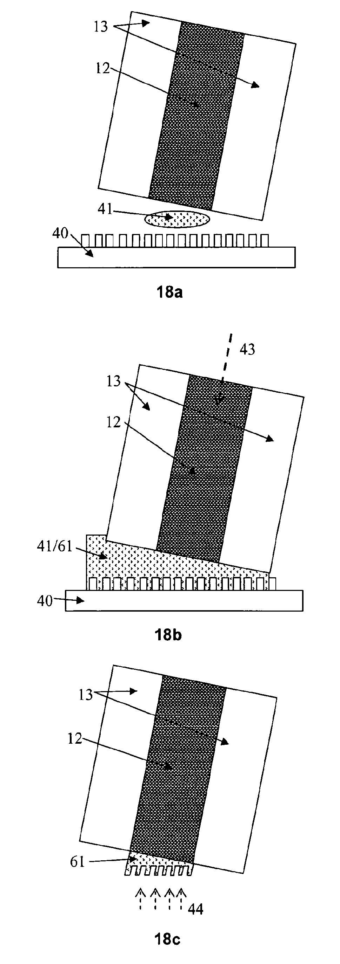

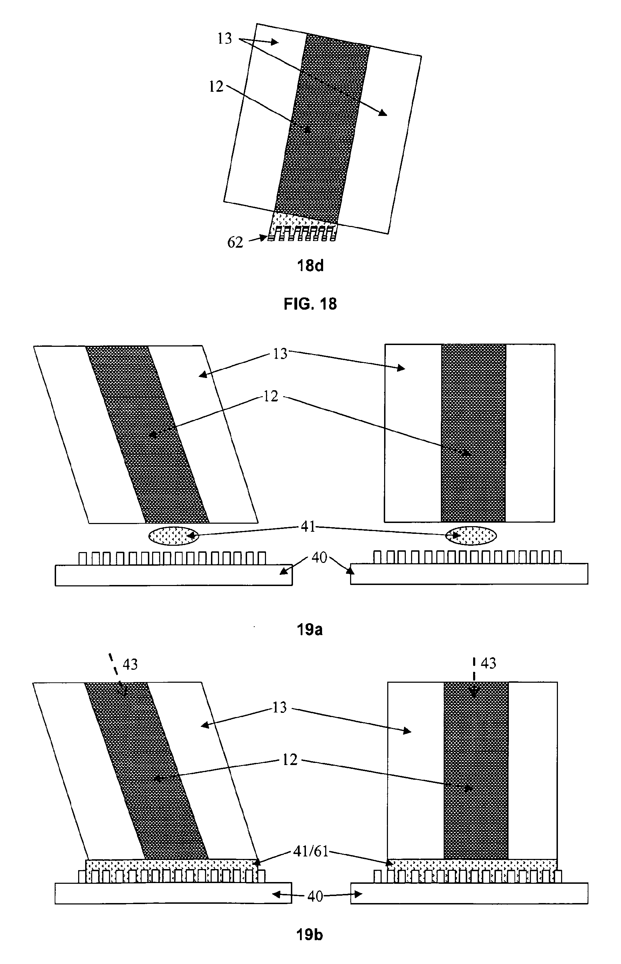

In preferred embodiments of the present invention a straight cleaved fiber (i.e. a fiber with zero facet angle) may be used and an intermediate structure may be provided between the fiber facet 15 and the diffraction structure 14, thereby providing a surface that forms a non-zero angle (e.g. an angle between 2 and 10 degrees) with the plane of the fiber facet 15. The diffraction structure 14 may then be formed on the surface of the intermediate structure. It is preferred that the intermediate structure is optically transparent to the wavelength of the light to be coupled. It is an advantage of providing such an intermediate structure that a diffraction structure 14 may be formed at a non-zero angle with the normal to the light propagation direction in the optical fiber without the need for using a fiber with a non-zero facet angle. Examples of this approach are described further and are for example illustrated in Figure 11 and Figure 18.

As shown in Figure 1, on the fiber facet 15 a diffraction structure, such as a metal grating structure 14, is present. The diffraction structure may be directly on the fiber facet. Alternatively, there may be a layer or a plurality of layers in between the fiber facet 15 and the diffraction structure 14. In a preferred embodiment the diffraction structure 14 on the fiber facet 15 is only present at the location of the core 12, as shown in Figure 1. In case the fiber facet 15 is fully covered with the diffraction structure 14, light may be coupled out of a waveguide into the fiber 11. However, only if the diffraction structure 14 is aligned to the fiber core 12, the light may be actually captured by the fiber and guided through the fiber core 12. Misalignment of the diffraction grating structure 14 with respect to the fiber core 12 leads to a reduction in coupling efficiency between the waveguide and the optical fiber or to no coupling at all.

The metal of the metal grating structure 14 may for example be silver, gold, aluminum or copper, but other metals may be used. The optimum design of the metal grating structure 14 is related to the properties of the waveguides to or from which light is to be coupled by means of the optical probe 10. For SOI-based waveguides the pitch of the metal grating may for example be in the range between 500 nm and 1000 nm. The thickness of the metal may for example be in the order of a few nm to a few tens of nm. Larger thicknesses are possible.

In Figures 2 and 3, the use of an optical probe according to an embodiment of the present invention in a testing configuration is illustrated. In this configuration, the optical probe may be used for wafer-scale testing of individual optical components or devices, such as (de)multiplexers, filters, amplifiers, equalizers, etc. on an integrated optical circuit. As illustrated in Figure 2, a wafer 20 comprises a plurality of integrated circuits 21 (schematically represented by means of rectangles in Figure 2). On each integrated circuit an integrated optical circuit 22 is defined, the integrated optical circuit comprising optical components 23, of which 3 components are shown in Figure 2. The optical components within an integrated optical circuit are interconnected by waveguides 24.

If an optical component 23 is to be tested individually, two optical probes 10 in accordance with the present invention may be used. This is illustrated in Figure 3. A first optical probe 101 may be brought in the vicinity of an input waveguide 241 connected to the optical component 231 to be tested and a second optical probe 102 may be brought in the vicinity of an output waveguide 242 connected to the optical component 231 to be tested. Doing so, an optical path is established between the first optical probe 101 (the first optical probe for example being connected to a light source) and the second optical probe 102, allowing sending light from the first optical probe 101 into the input waveguide 241 of the optical component 231 to be tested and picking up light from the output waveguide 242 of the optical component 231 to be tested by means of the second optical probe 102. The second optical probe 102 may for example be connected to a detector or a spectrum analyzer. Alignment of an optical probe 10, 101, 102 with a waveguide 24, 241, 242 may be done by means known in the art. For example, first a passive alignment step may be done, followed by an active alignment step.

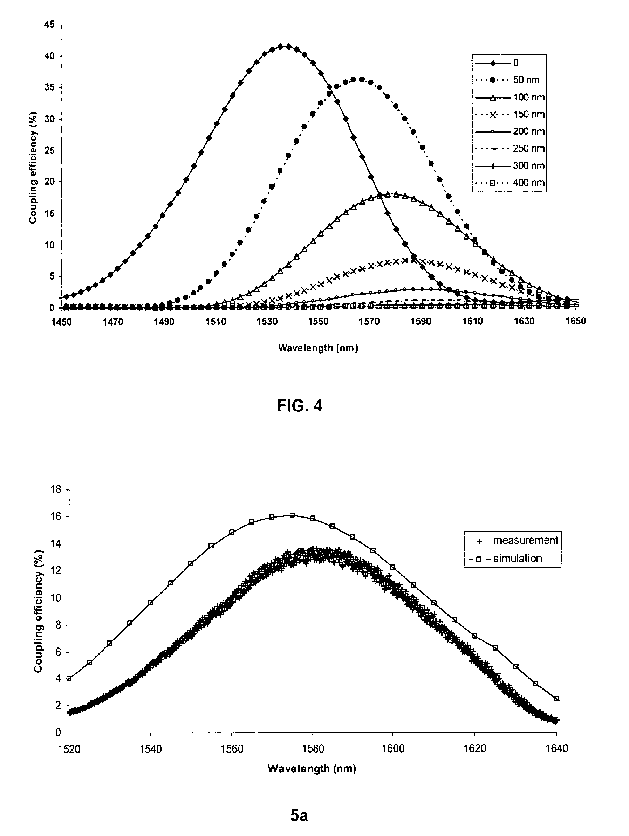

In the context of the present invention, bringing an optical probe in the vicinity of a waveguide means that the distance between the diffraction structure of the optical probe and the waveguide is for example in the range between 0 nm and 100 nm. However, depending on the kind of diffraction structure, the material system, and the required coupling efficiency, larger distances between the optical probe and the waveguide may be used. The highest coupling efficiency between the optical probe 10, 101, 102 and a waveguide occurs in contact mode, i.e. a mode wherein the distance between the diffraction structure 14 of the optical probe and the waveguide is zero. In this mode there may be a risk of damaging the diffraction structure and/or the waveguide. Therefore, in preferred embodiments of the present invention a non-contact mode may be used, i.e. a mode wherein there is a non-zero distance between the diffraction structure 14 of the optical probe 10, 101, 102 and the waveguide. Figure 4 shows the result of 2D FDTD (Finite-Difference Time-Domain) calculations of the coupling efficiency between an optical probe 10, 101, 102 comprising a metal grating 14 and a silicon waveguide, for different distances (ranging from 0 to 400 nm) between the metal grating and the waveguide, plotted as a function of the wavelength. From these calculations it can be concluded that the decrease in coupling efficiency with increasing distance between the metal grating and the waveguide goes with a red shift of the wavelength of maximum efficiency. Furthermore, for the example shown it is preferred that the distance between the metal grating and the waveguide does not exceed 200 nm.

The proposed testing configuration as shown in Figure 3 is advantageous. The vertical configuration according to the present invention (i.e., the configuration wherein the optical probe is out of the plane of the waveguide and close to the normal to the waveguide plane) allows for wafer-scale testing of optical components while only using a limited area for testing. This enables testing of highly integrated optical circuits as well as parallel testing of various circuits at the same time.

An optical probe 10, 101, 102 in accordance with the present invention may be used for other applications than testing. For example, it may be advantageously used in a packaging process for integrated optical circuits. In prior art methods, coupling structures are provided on the wafer comprising the photonic circuits, the coupling structures being for coupling an input/output fiber to a photonic circuit on the wafer. Coupling a fiber to a coupling structure on the wafer requires alignment in 2 directions in the plane of the photonic circuit. However, when using an optical probe according to the present invention, wherein the optical probe comprises an optical fiber with a coupling structure (e.g. a diffraction structure) on the fiber facet, the need for a coupling structure on the wafer comprising the photonic circuit may be avoided. Further, alignment between the fiber and the waveguide on the circuit is only needed in one direction (i.e., in a direction in the plane of the photonic circuit, perpendicular to the propagation direction in the waveguide). An optical probe according to the present invention may for example also be used for the integration of a light source or a light detector on a photonic circuit.

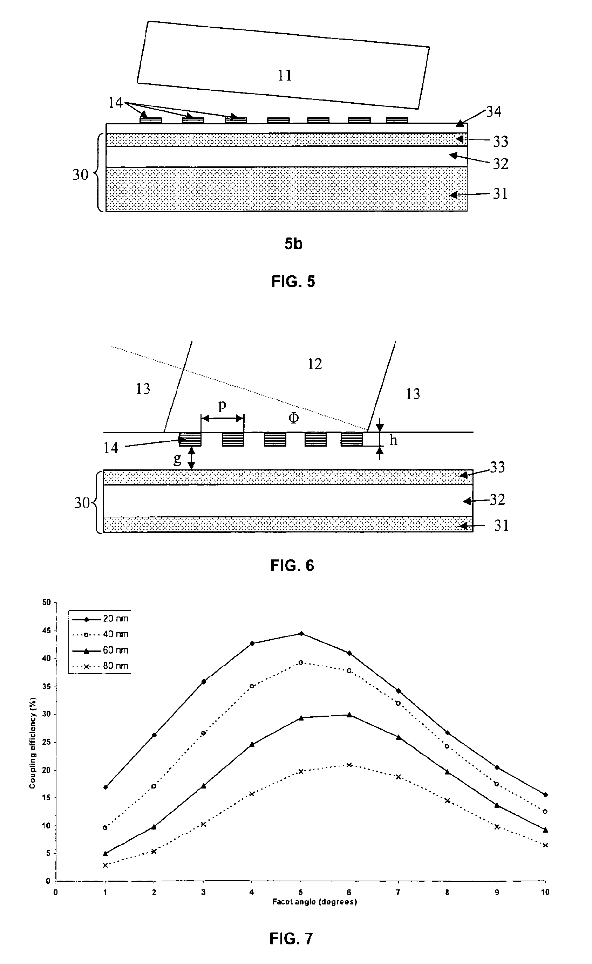

An element of an optical probe 10, 101, 102 according to the present invention is the diffraction structure, e.g. metal grating structure 14. This metal grating structure 14 acts as a diffraction grating and is designed such that efficient coupling is achieved from the waveguide mode into the fiber mode and vice versa. When designing an optical probe 10, 101, 102 in accordance with the present invention, the properties of the grating structure 14 and the angle between the light propagation direction in the waveguide and the light propagation direction in the optical fiber 10 are the main design parameters. For the design and optimization of metal gratings CAMFR was used, a two-dimensional fully vectorial simulation tool based on eigenmode expansion and mode propagation with perfectly matched layer boundary conditions. Figure 6 schematically illustrates the 2D model that was used for performing calculations. Calculations were performed for silicon waveguides, wherein a SOI substrate 30 is assumed, comprising a silicon substrate 31, a buried oxide layer 32 and a silicon layer 33. In this configuration, the silicon layer 33 forms the core of a silicon waveguide, with layer 32 acting as a cladding layer. In Figure 6, φ corresponds to the angle between the light propagation direction in the optical probe and the normal to the waveguide plane. In the example shown in Figure 6 (i.e. where the fiber facet is substantially parallel to the waveguide plane), Φ is substantially equal to the facet angle. In the structure shown in Figure 6, h is the height of the teeth (i.e. the thickness of the metal layer) of the metal grating structure 14 and p is the grating period. The distance or gap height between the diffraction grating 14 of the optical probe 10 and the core of the waveguide is indicated with g.

Given the high refractive index contrast between the metal teeth of the metal grating 14 and their surroundings of air, fiber material, and silicon, the grating is very strong. This has many advantages. For instance, an advantage is that a small number of grating teeth is sufficient to obtain strong power diffraction over a limited area. Therefore, the grating may be compact (e.g., about 10 µm x 10 µm) and may be positioned on a fiber core 12, which is typically 10 µm in diameter. Another advantage is that coupling of light between a waveguide 24, 241, 242 and an optical probe 10, 101, 102 may take place without physical contact between the waveguide and the optical probe. As long as the optical probe is in the vicinity of the waveguide, coupling of light may take place and individual optical components 23, 231 can be tested.

These properties have been proven experimentally. It was shown that good coupling of light between a waveguide 24, 241, 242 and an optical fiber 11 may be obtained by means of a metal grating structure 14, wherein the metal grating structure is not in direct physical contact with the waveguide. A cross-section of the structure used for the experiments is shown in Figure 5b. On an SOI substrate 30, a 50 nm thick aluminum-oxide layer 34 was grown and a metal grating structure 14 was formed on top of this aluminum-oxide layer 34. A 10 µm x 10 µm metal grating 14 was fabricated with a period p of 600 nm and a metal thickness h of 40 nm. By providing the aluminum-oxide layer 34, the metal grating 14 could be brought into close vicinity of the silicon waveguide without making direct physical contact between the grating 14 and the waveguide core. As illustrated in Figure 5b, the distance between the silicon waveguide core and the grating was equal to the thickness of the aluminum-oxide layer 34.

The diffraction characteristics of the grating structure 14 shown in Figure 5b were determined by a transmission experiment using conventionally cleaved fibers (i.e. fibers with zero facet angle). A single mode fiber 11 connected to a tunable laser source was positioned over a first grating 14 and another fiber 11 connected to a photodetector was positioned over a second grating 14 on the same waveguide. After an active alignment procedure whereby the fiber positions were optimized in order to obtain maximal transmission, the wavelength of the light from the tunable laser source was swept and the transmitted light was measured by means of the photodetector. From this measurement, the fiber-to-waveguide coupling efficiency of a single grating coupler was calculated. The results are shown in Figure 5a. For comparison, the result of a fully-vectorial simulation based on eigenmode expansion (CAMFR) of the structure is added in Figure 5a. It can be concluded that coupling of light between a fiber and a waveguide is obtained without direct physical contact between the fiber and the waveguide. The measurement data are in good agreement with the simulation results.

The diffraction grating 14 on the fiber facet 15 is designed in such a way that light from a waveguide on a substrate is diffracted in a direction which is slightly off the vertical to the substrate. For example, the angle between the normal to the substrate and the direction in which light from the waveguide is diffracted (corresponding to the propagation direction in the optical fiber 11) may be in the range between 0 degrees and 10 degrees. Other angles are possible. The reason for this off-normal orientation is to avoid large second order diffraction back into the waveguide. Such a strong reflection back into the waveguide is preferably avoided as it may deteriorate the performance of some optical components. Moreover, as known by a person skilled in the art, the coupling efficiency that is obtained in this configuration may be higher than with a vertically diffracted field.

Figure 7 shows the result of a calculation of the coupling efficiency between a silicon waveguide and an optical fiber 11 with a gold grating structure 14 on the fiber facet 15, the gold grating having a grating period p of 580 nm (structure as shown in Figure 6). Results of these calculations are shown in Figure 7 as a function of the facet angle φ and for different distances or air gap heights g (20 nm, 40 nm, 60 nm and 80 nm) between the grating structure 14 and the core 33 of the silicon waveguide. From these calculations, it can be concluded that the facet angle φ has a significant influence on the coupling efficiency between the waveguide and the optical fiber 11 and that a proper selection of the facet angle is important. For the design of the grating structure 14 used in the calculations, the optimal value of the facet angle φ is 4 to 6 degrees, slightly dependent on the air gap height g which is present between the waveguide core 33 and the grating 14. It is clear that the coupling efficiency decreases when the air gap height g is bigger.

It is important to note that for testing purposes a high coupling efficiency is advantageous but not necessary. Consequently, the design is tolerant towards the mentioned design parameters. However, for certain applications of the optical probe according to embodiments of the present invention, a high coupling efficiency might be needed. In those cases, design parameters are more critical and the properties of the probe in terms of grating parameters and facet angle may be optimized for obtaining a good coupling efficiency for the SOI layer structure under investigation.

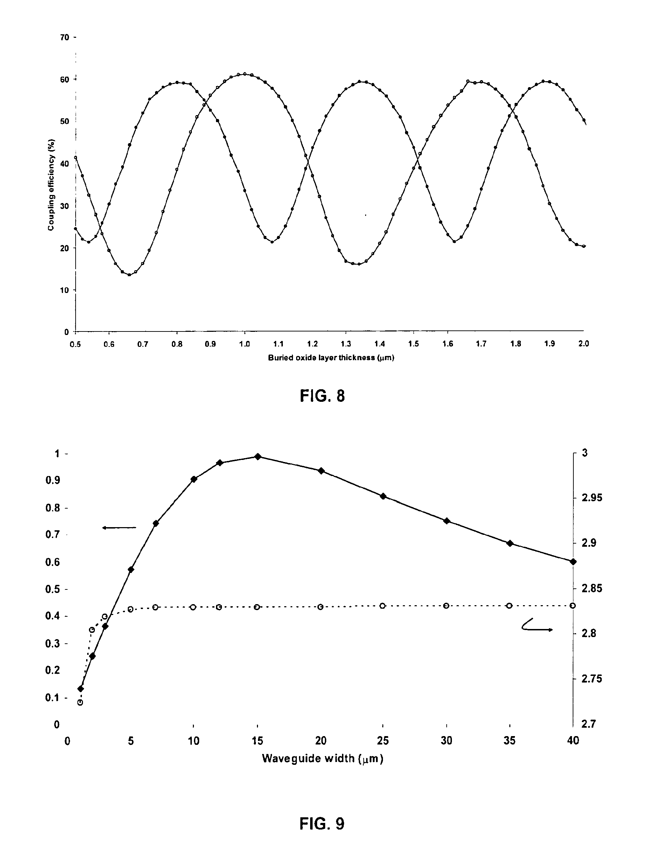

This is illustrated in Figure 8. Figure 8 shows the coupling efficiency for two different optical probes 10, 101, 102: one with a grating period p of 610 nm and a facet angle Φ of 9 degrees (filled circles) and another one with a grating period p of 800 nm and a facet angle Φ of 35 degrees (open circles), as a function of the thickness of the buried oxide layer 32. For example, when integrated optical circuits on an SOI platform with a 1 µm thick buried oxide layer 32 are under investigation, it is advantageous to use a probe 10, 101, 102 with the latter properties.

Higher coupling efficiencies may also be obtained by making the diffraction grating structure 14 non-uniform for obtaining a better matching with the fiber mode. In this way, coupling efficiencies larger than 60 % may be obtained.

Interconnection between different optical components 23, 231 on an integrated optical circuit 22 is typically done by means of photonic wires with a typical width of 0.5 µm or by means of optical waveguides with a typical width of 3 µm or more. When the optical probe 10, 101, 102 according to embodiments of the present invention is used for coupling light into these waveguides, the coupling configuration is a 3D configuration that differs quite drastically from the 2D model shown in Figure 6, which corresponds to coupling with a slab waveguide. In particular, in practical applications the waveguides have limited width and coupling to these waveguides may be less efficient than coupling to a slab waveguide. To quantify this 3D-effect, a 3D-correction factor has been calculated based on the assumption that the electric field of the fundamental mode of the finite width waveguide can be written as a multiplication of the lateral mode profile and a field component of the slab mode. This relation is described by D. Taillaert et. al. in "Compact efficient broadband grating coupler for silicon-on-insulator waveguides", Optics Letters Vol. 29, No, 23, December 1, 2004. This assumption is valid when the waveguide width is sufficiently large (i.e. when the width of the waveguide is substantially larger than the height). The simulation results given by the 2D model (as shown in Figure 6) then need to be multiplied with this 3D-correction factor for obtaining the coupling efficiency to a finite width waveguide.

The result of such a calculation is plotted as a function of the waveguide width in Figure 9. Figure 9 shows the 3D correction factor (filled squares) for interpreting 2D simulation results and the effective index of the fundamental TE mode (open circles) as supported by these waveguides. Over the considered waveguide width range (1 µm up to 40 µm), the effective index of the fundamental TE mode that is supported by these waveguides varies only slightly and is equal to the effective index of the SOI slab mode (i.e. 2.8309) within 5% for a 1 µm wide waveguide and within 1% for all other waveguide widths. This result indicates that the approximation used is valid.

From Figure 9 it follows that there is an optimal waveguide width for which the coupling efficiency is highest. In the example shown, the optimal waveguide width is about 15 µm and the corresponding 3D-correction factor equals 0.99. Furthermore, it can be concluded that there is reasonable coupling, both to smaller and to wider waveguides.

The previous analysis shows that an optical probe 10, 101, 102 according to the present invention can be applied to optical interconnections in a flexible way. For a wide range of waveguide widths, coupling may be sufficient for testing purposes. However, in very highly integrated optical circuits 22, components 23, 231 are typically connected by photonic wires of 0.5 µm width. In order to test individual components in this type of optical circuits, it is advantageous to design the integrated optical circuit in such a way that the interconnection waveguides are locally widened to a width of 2 to 3 µm or wider, such that sufficient light can be coupled between an optical probe 10, 101, 102 according to the present invention and an interconnection waveguide 24, 241, 242. Widening of interconnection waveguides is frequently applied in optical circuits for reducing optical losses of on-chip waveguiding.

In the following, methods are described for the fabrication of optical probes 10, 101, 102 according to the present invention. The description below relates to the fabrication of optical probes wherein the optical element is an optical fiber 11 and wherein the diffraction structure is a metal grating structure 14. However, methods described below may be more generally used for fabricating devices wherein a structure, e.g. a structure comprising a pattern, e.g. a metal pattern, is to be formed on a relatively small surface or facet 15 such as for example a fiber facet 15. Conventional processing steps such as e.g. spin coating typically used in chip fabrication are not applicable on a surface as small as a fiber facet.

Fabrication of an optical probe 10, 101, 102 according to the present invention may involve cleavage of a single mode fiber 11 and polishing for obtaining the appropriate angled facet 15. Fibers with facets cleaved under a non-zero facet angle are commercially available. However, in preferred embodiments of the present invention a conventionally cleaved fiber (i.e. a fiber with zero facet angle) may be used and an intermediate structure may be provided that allows forming the diffraction structure 14 at a non-zero angle with the plane of the facet 15.

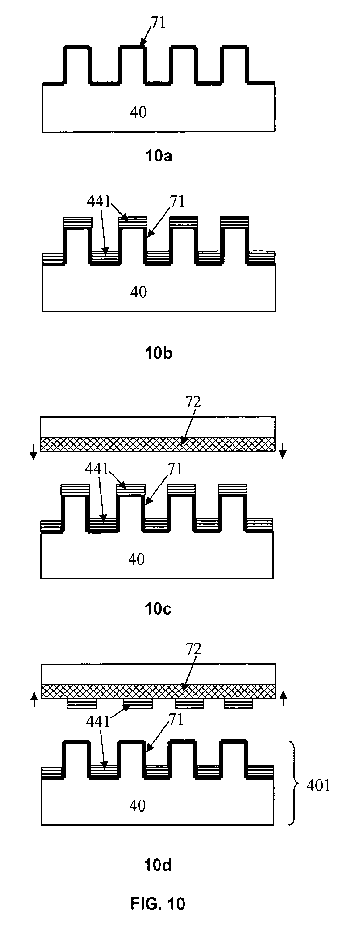

A fabrication process for manufacturing an optical probe 10, 101, 102 with a conventionally cleaved fiber 11 (i.e. a fiber with zero facet angle) and a coupling structure comprising a metal grating diffraction structure 14 is described below. In this fabrication process, a specially prepared carrier 401 is used, wherein the carrier 401 is carrying the metal pattern that is to be transferred to the optical probe for forming the metal grating structure 14. Figure 10 illustrates a preparation process of such a metallized carrier 401. In a first step (Figure 10a) a template 40, e.g. a template 40 made of a hard material such as for example silicon, and e.g. comprising raised areas and recessed areas corresponding to a grating pattern, is treated so as to minimize its surface energy. In the case of a silicon template, this may for example be done by providing trideca-fluoro-(1,1,2,2)-tetrahydrooctylsilane ((CF₂)₆SiCl₃). The reaction of the tricholorosilane groups to the surface oxygen atoms takes place under separation of HCl, resulting in an anti-sticking layer 71 being formed at the silicon surface of the template 40. Next, as illustrated in Figure 10b, a metal layer 441 is evaporated on the template, wherein the thickness of the metal layer 441 is for example a few tens of nm (corresponding to the thickness of the metal grating structure to be formed). In this way, metal covers the bottom of the trenches (i.e. the recessed areas) of the template 40 as well as the raised areas of the template 40. The metal on the raised areas of the template is then removed selectively (Figure 10c). This may for example be done by means of a micro-contact printing technique. By bringing the template with the metal layer 441 into contact with a sticky material 72 and then lifting it, the metal 441 on the raised areas of the template may be removed from the template while the metal 441 on the recessed area remains (Figure 10d). The transfer of metal from the template to the sticky material 72 is facilitated by the poor adhesion between the metal 441 and the silicon template due to the anti-sticking layer 71. For some metals, such as for example gold, adhesion to silicon may be very poor and an anti-sticking layer 71 may not be needed for the selective metal removal. However, the anti-sticking layer 71 may be needed for the next step in the fabrication process, as described below.

In the example shown in Figure 10, a carrier 401 comprising recessed areas and raised areas is shown wherein the metal 441 is only present in the recessed areas. However, other configurations are possible. For example, in embodiments of the present invention the metal 441 may be present both in the recessed areas and in the raised areas of the carrier 401. In other embodiments a carrier 401 with a flat surface comprising a patterned metal layer may be used or a non-patterned metal layer may be used, e.g. for forming a mirror.

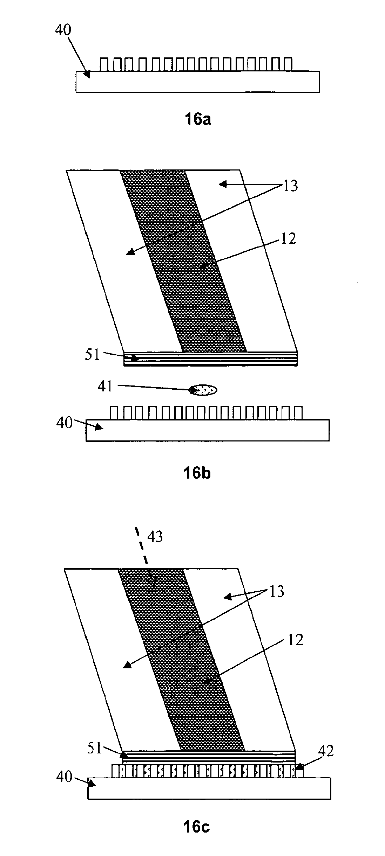

Once the carrier 401 is ready, it can be used in a process for forming, e.g. on a fiber facet 15, a coupling structure comprising a metal diffraction grating 14, as illustrated in Figure 11. The carrier 401 may be placed on a vacuum chuck to remain fixed. The fiber 11 may be mounted on a micromechanical x,y,z-stage. As illustrated in Figure 11a, a drop of UV-curable material 41, e.g. a drop of low-viscous (liquid) UV-curable monomer, is dispensed onto the carrier 401. For example, the acrylate based product PAK-01 developed for nano imprint lithography may be used. Then the fiber 11 is positioned above and sufficiently close to the carrier 401 such that the drop of UV-curable material 41 is squeezed between the fiber facet 15 and the carrier 401 (Figure 16b), the fiber 11 being tilted with respect to the normal to the carrier surface. Doing so, the recessed areas of the carrier 401 corresponding to the grating pattern are filled with the low-viscous material 41. Next, the material 41 is cured by UV-light 43, e.g. at room temperature (Figure 11b), thereby hardening the material 41 and forming a polymer 61. In a first embodiment UV-light 43 for curing the material 41 may be provided through the fiber core 12. In this way, only the portion of the UV-curable material 41 extending from the fiber core 12 is cured and a polymer 61 is only formed at the location of the fiber core 12 (Figure 11c). The result of UV-curing through the fiber core 12 is thus a cylinder-shaped polymer structure 61 extending from the fiber core. In a second embodiment an external UV-source may be used for curing the material 41. In this way, the whole layer of material 41 may be cured, and not only the material 41 located at the fiber core 12. In both embodiments the mold pattern is replicated in the polymer structure 61: in the example shown the polymer structure 61 comprises recessed areas at locations corresponding to raised areas of the carrier 401 and it comprises raised areas at locations corresponding to recessed areas of the carrier 401. In embodiments of the present invention, thermal curing may be used instead of UV curing for hardening a material 41 and forming a polymer 61, or a combination of thermal curing and UV curing may be used.

After curing, the fiber 11 is lifted from the carrier 401 (Figure 11c). Upon lifting, the polymer 61 may stick to the facet 15, as the adhesion of the polymer 61 to the anti-sticking layer 71 of the carrier 401 is substantially weaker than the adhesion of the polymer 61 to the facet 15. Furthermore, transfer of the metal 441 from the carrier 401 to the polymer 61 may take place, as the adhesion of the metal 441 to the polymer 61 is substantially stronger than the adhesion of the metal 441 to the anti-sticking layer 71 of the carrier. As the mold 401 is hold tightly by a vacuum chuck, adhesion forces are overcome during fiber lifting. A cleaning step may be applied, e.g. to remove any uncured material 41.

In embodiments of the present invention an anti-sticking layer 71 may not be needed, provided that the adhesion between the polymer 61 and the surface of the carrier 401 is weaker than the adhesion between the polymer 61 and the facet 15, and provided the adhesion between the metal 441 and the carrier 401 is weaker than the adhesion between the metal 441 and the polymer 61.

An aspect in the fabrication of an optical probe 10, 101, 102 according to the process described above and illustrated in Figure 11, is the alignment between the coupling structure and the fiber core 12. As described above, a self-aligned technique may be used based on UV-curing of the UV curable material 41 through the fiber core 12. In this case the carrier 401 typically comprises a patterned area, e.g. grating area, which is larger than the area of the core 12 on the fiber facet 15. Because only the material 41 located on the fiber core is illuminated and thus cured, the transfer of metal 441 from the carrier 401 to the fiber 11 only occurs in the area corresponding to the location of the fiber core 12. Therefore, a very good alignment between e.g. a metal grating 14 and the core 12 may be obtained. This self-aligned method may be used in case the thickness of the metal 441 is sufficiently low to allow breaking of the metal at the edge of the core region, i.e. at the boundary between the cured material 61 and the non-cured material 41. If the metal 441 is too thick (e.g. thicker than a few tens of nm), breaking may be difficult and an undesired transfer of metal from the area surrounding the core region may be difficult to avoid. Therefore, another technique for aligning the diffraction structure 14 with the fiber core 12 may be needed. For example, an active alignment procedure may be used. In this case the carrier 401 may contain relatively small grating areas of e.g. 10 µm x 10 µm in an SOI layer stack. For aligning the fiber core 12 to a grating area on the carrier 401, use can be made of the diffraction occurring when light in the top silicon layer of the SOI layer stack enters the grating zone. By moving the fiber 11 over the grating on the carrier 401 and by optimizing the position of the fiber such that most light is captured, the fiber 11 may be aligned with the grating structure on the carrier 401. However, due to the fact that scattering is the dominant mechanism instead of diffraction, the position of optimal light capturing may not correspond to the position of optimal coupling. Experiments using UV-curing through the fiber core 12 show that misalignment takes place using this active alignment procedure and that an additional translation of a few microns in the direction of the grating may be needed for obtaining good alignment.

It is an advantage of the process described above that the number of processing steps needed is low as compared to prior art solutions. In fact, this method relies primarily on the preparation of a carrier 401 in such a way that the number of processing steps in which actual fiber handling is involved is reduced to a single step. This is highly advantageous especially when a fabrication scheme is envisioned for making multiple optical probes 10, 101, 102 in parallel instead of one optical probe at a time. Moreover, using a conventionally cleaved fiber 11 (with zero facet angle) as the starting point of the fabrication process is an advantage.

This fabrication process offers many advantages over e.g. direct-write methods and may therefore be used for fabricating a much wider range of devices than the optical probe described above. It can be used for several applications where patterns, e.g. sub-micron patterns, are to be formed on a facet of an optical element or on other small substrates. For example, devices that exploit surface plasmon resonance effects of single, sets or arrays of metal particles may be fabricated using the method described above, thereby relaxing the stringent fabrication requirements. Using the fabrication method of the present invention, a very high resolution in patterning can be reached, only limited by the resolution of the carrier 401.

Experiments were performed, wherein optical probes 10, 101, 102 were fabricated based on the method described above and illustrated in Figure 10 and Figure 11.

In a first set of experiments, an optical probe 10, 101, 102 comprising a conventionally cleaved fiber 11 (i.e. a fiber wherein the facet 15 extends in a plane orthogonal to the propagation direction in the fiber core 12) and a gold grating 14 with a teeth height h (metal thickness) of 20 nm, a grating period p of 630 nm, and a filling factor of 50%, was fabricated, with an angle Φ of 10 degrees between the plane of the grating 14 and the plane of the fiber facet 15. UV-curing was applied using an external source and the active alignment procedure described above, using an SOI-based carrier 401 comprising 10 µm x 10 µm gratings was used to align the grating 14 to the fiber core 12. The coupling efficiency was experimentally determined. Two gold grating fiber probes where brought into contact with a straight 220 nm x 3 µm waveguide. One probe was connected to a tunable laser source with an output power of 1 mW. The other optical probe was connected to a photodetector. Polarization wheels were used to control polarization. The wavelength of the tunable laser source was swept from 1500 nm to 1580 nm and the output power was registered. From this experiment, the coupling efficiency between the waveguide and the optical probe was calculated based on the assumption that the waveguide was lossless and that both optical probes were identical. 15% coupling efficiency was demonstrated at a wavelength of 1545 nm with a 1dB bandwidth of 38 nm.

Two gold grating fiber probes fabricated as described above were applied in a testing configuration. In particular, two probes were used to deliver light to the input port and capture light from the output pass port of an SOI microring resonator with photonic wire dimensions of 220 nm x 500 nm. In Figure 12 the measurement results are shown. The spectral behavior of the microring resonator is clearly recognizable in the measurements. As expected, the pass spectrum of the microring resonator drops drastically at its resonant wavelengths. This data can be used for analyzing the performance of the microring resonator, such as Q-factor, finesse, round trip loss.

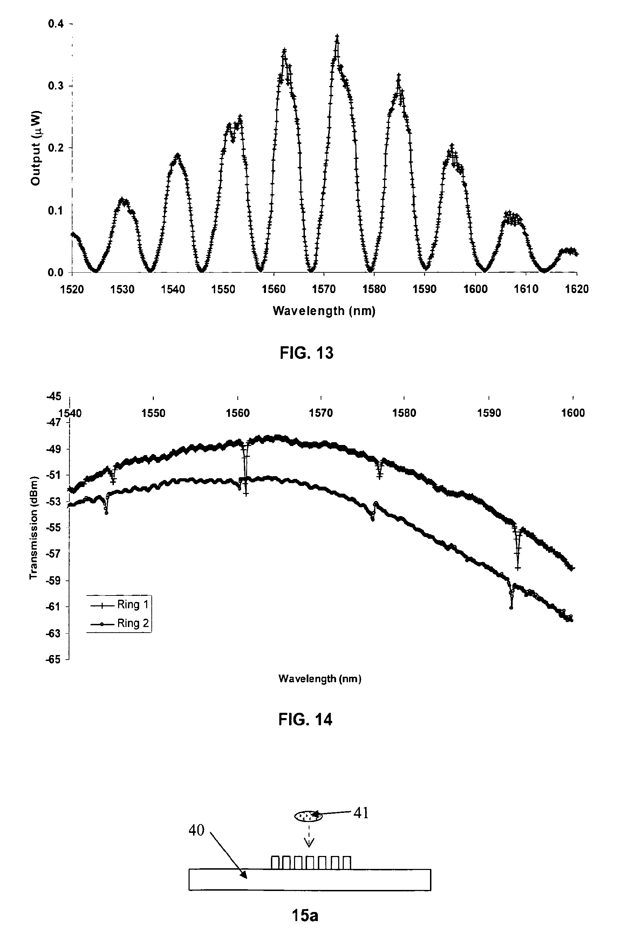

In another experiment the optical probe 10, 101, 102 was used to probe the output waveguide of a Mach-Zehnder interferometer on the same SOI chip. The result of this measurement is plotted in Figure 13 and shows the proper operation of the metal grating optical probe 10, 101, 102.

In a second set of experiments an optical probe 10, 101, 102 was made with the same parameters as in the first set of experiments, but using UV-curing through the fiber core 12 instead of using an external source for UV-curing. The optical probe 10, 101, 102 was connected to a broadband SLED (Surface Emitting Light Emitting Diode) source with an output power of 10 mW and was used for coupling light into the waveguides of the same SOI chip. Standard grating couplers and standard fibers were used for coupling light out of the waveguides. Using this set-up, two identically designed microring resonators fabricated in the same run within a die were measured. This type of measurement may be interesting when quantifying fabrication process uniformity on different levels. The result of a measurement of two rings is shown in Figure 14. Differences in resonance wavelength can be observed and the data can be used for further investigation.

It is an advantage of providing the UV-light for curing through the fiber core 12 that a self-aligned process is obtained, i.e. the coupling structure, e.g. metal grating, is self-aligned to the location of the core 12 on the facet 15. By providing a self-aligned process, the need for an alignment procedure, e.g. an alignment procedure based on the use of alignment features or an active alignment procedure may be avoided. Furthermore, it is an advantage of the method described above that the need for a lift-off process or an etching process for forming the submicron pattern (e.g., metal grating pattern 14) on the fiber facet 15 may be avoided. In addition, the need for direct-write methods defining the pattern, such as e.g. e-beam lithography and Focused Ion Beam etching, may be avoided. These methods are rather slow, power consuming and time consuming and they require a rather high number of processing steps. It is and advantage of a method according to the present invention that a rapid and low cost fabrication process is provided with a low number of processing steps. In addition, it is and advantage of the method described above that a fiber 11 with zero facet angle may be used.

Below, alternative processes for fabricating a metal grating structure 14 on a fiber facet 15 are described. These processes are however less advantageous than the process described above, because they use metal lift-off or metal etching, and/or because a fiber 11 with an angled facet 15 is used.

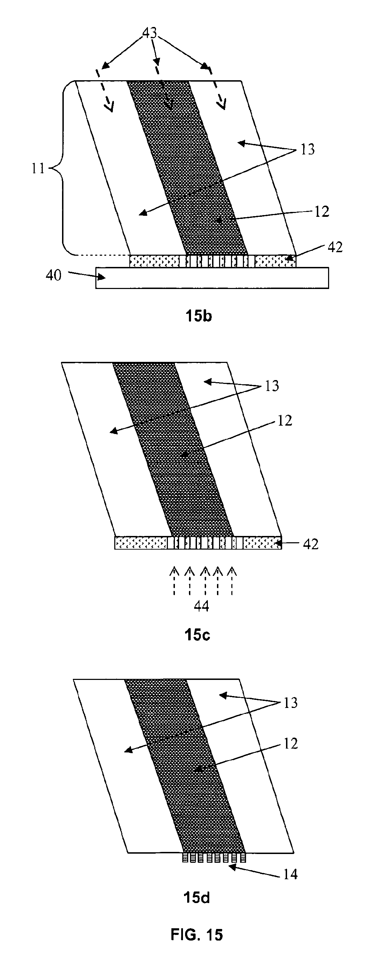

A first alternative process is illustrated in Figure 15. This process is based on imprint technology, a rapid and low cost fabrication process. As shown in Figure 15a, a template 40 comprising a pattern is provided, the template 40 being made of a hard material such as for example silicon, and serving as an imprint mold. Furthermore, a suitable amount, e.g. a drop 41, of an imprint resist, e.g. a UV-curable imprint resist is provided. Then a conventional nano imprint technique, e.g. a UV-based nano imprint technique, is applied, wherein the imprint resist 41 is squeezed between the template 40 and the facet 15 of an optical fiber 11, thereby forming a hardened imprint resist layer 42 and replicating the pattern of the template 40 in the imprint resist layer 42 on the facet 15 of the optical fiber 11. The light 43 for curing (i.e. hardening) the imprint resist 41 may for example be delivered through the fiber 11 (Figure 15b). In an alternative process, the light 43 for curing the imprint resist 41 may be provided only through the fiber core 12, such that a self-aligned process may be obtained. The nano imprint step may be followed by metal 44 evaporation (Figure 15c) and lift-off (Figure 15d), for forming a metal grating structure 14.

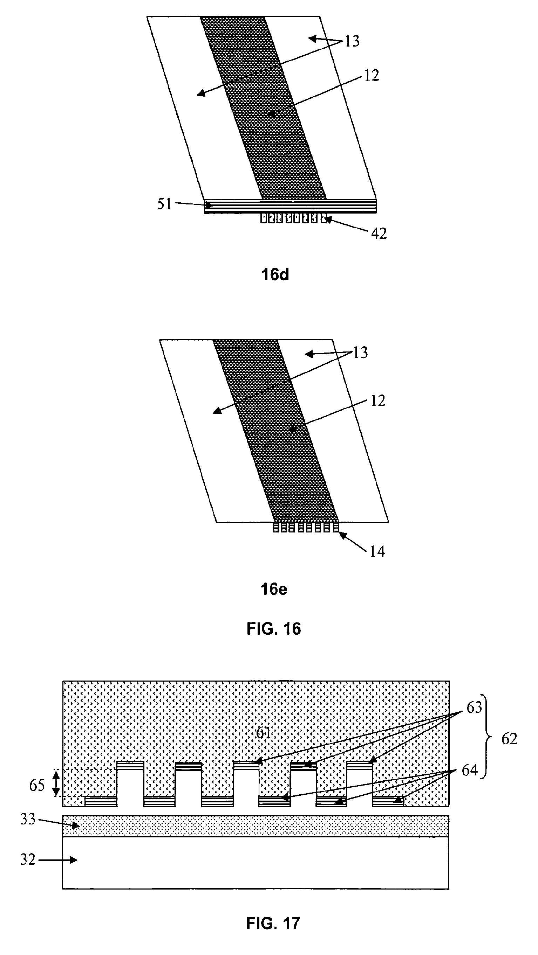

Figure 16 illustrates another process flow for fabricating a metal grating structure 14 on a fiber facet 15 according to an embodiment of the present invention. After providing an imprint mold 40 comprising a grating with an appropriate period (Figure 16a), a thin metal layer 51 is evaporated on the fiber facet (Figure 16b) and a UV-based nano imprint technique is applied for replicating the pattern of the template 40 in an imprint resist layer 42 on the facet 15 of the optical fiber 11, wherein the UV light 43 for curing the imprint resist is delivered through the fiber core 12 (Figures 16c and 16d). In this way a self-aligned process is obtained. The metal layer 51 may then be etched to form the metal grating 14, thereby using the imprint resist layer 42 as an etching mask, and the resist layer 42 may be removed (Figure 16e).

Other process sequences and other diffraction structures may be used. For example, alternative diffraction structures and process sequences are illustrated in Figure 17 and Figure 18. In these figures, an alternative design for an optical probe 10, 101, 102 according to the present invention is illustrated and a low cost fabrication method is provided in which there is no need for metal etching or lift-off steps. In this embodiment, the optical probe may comprise a conventionally cleaved optical fiber 11. On the facet of the optical fiber 11a polymer 61 is structured in the form of a grating, wherein the average plane of the grating forms an angle with the plane of the fiber facet. A metal may be evaporated in a directional manner on the structured polymer, thereby forming a double grating structure 62 (Figure 17), comprising a first level grating 63 and a second level grating 64.

The double grating structure 62 (Figure 17) acts as the diffraction structure of this optical probe. The polymer layer 61 forms an intermediate structure between the diffraction structure and the fiber facet. When an optical probe comprising a double grating structure as shown in Figure 17 comes in the vicinity of a waveguide, light may be coupled between the waveguide and the optical probe. CAMFR-simulations of the double grating structure 62 predict a coupling efficiency of over 50 %, even when the air gap height g between the probe 10, 101, 102 and the waveguide core 33 exceeds 50 nm. The calculated efficiency of this alternative design is higher than predicted for the single grating design described above. One of the critical design parameters in this double grating design is the distance 65 between the first level grating 63 and the second level grating 64 which may be optimized for optimal coupling.

An example of a potentially low cost fabrication scheme for an optical probe 10, 101, 102 comprising a double grating structure 62 is illustrated in Figure 18. In the example shown, a straight cleaved fiber is used (i.e. the facet angle Φ is 0 degrees). After providing an imprint mold 40 comprising a grating with an appropriate period (Figure 18a), a suitable amount, e.g. a drop 41, of an imprint resist, e.g. a UV-curable imprint resist is provided and squeezed between the mold 40 and a fiber 11, the fiber being tilted with respect to the normal to the mold surface (Figure 18b). The imprint resist is then locally cured and hardened by means of light, e.g. UV light 43 delivered through the fiber core 12 (Figure 18b), thereby forming a polymer structure 61 on the fiber facet at the location of the fiber core 12. Next, as illustrated in Figure 18c, a metal 44 is deposited directionally onto the polymer structure 61. This results in the double grating structure shown in Figure 18d.

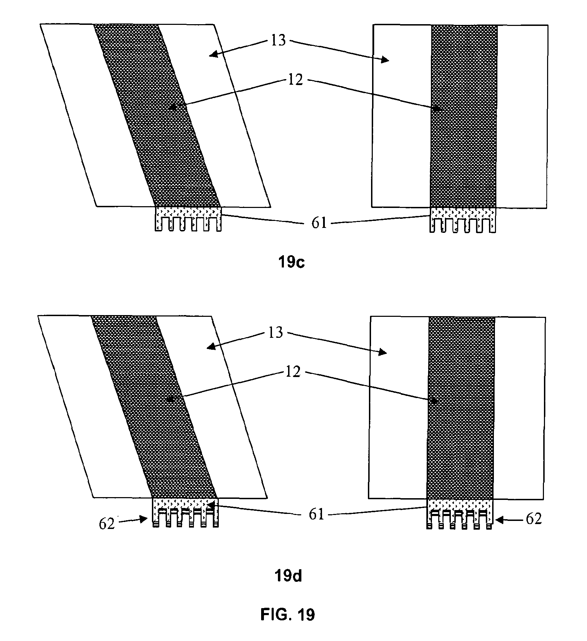

Other fabrication schemes for optical probes 10, 101, 102 comprising a double grating structure 62 according to the present invention are illustrated in Figure 19.

An optical probe comprising a double grating structure 62 may preferentially be fabricated using the method with the metallized carrier 401, as described above with respect to Figure 10 and Figure 11. For forming a double grating structure 62, a carrier 401 may be used that comprises recessed areas and raised areas corresponding to a grating pattern, and wherein a metal layer 441 is present in the recessed areas and in the raised areas.

It should be understood that the illustrated embodiments are examples only and should not be taken as limiting the scope of the present invention. The claims should not be read as limited to the described order or elements unless stated to that effect. Therefore, all embodiments that come within the scope and spirit of the following claims and equivalents thereto are claimed as the invention.

## Claims

1. An optical probe (10, 101, 102) for sending light into an optical waveguide on a substrate or for receiving light from an optical waveguide on a substrate, the optical probe (10, 101, 102) comprising an optical element (11) for guiding the light in a propagation direction, said optical element (11) having a facet (15) where the light enters or exists the optical element (11), means being provided for coupling the light between the optical element (11) and the waveguide, **characterized in that** said light coupling means are formed on said facet (15) and comprise a diffraction structure (14).

2. The optical probe (10, 101, 102) according to claim 1, **characterized in that** the light coupling means are constructed such that the optical probe (10, 101, 102) is provided for being placed with the propagation direction under a predetermined angle with respect to the orthogonal to the waveguide.

3. The optical probe (10, 101, 102) according to claim 2, **characterized in that** said predetermined angle is between 0 and 10 degrees.

4. The optical probe (10, 101, 102) according to any of claims 2 and 3, **characterized in that** the facet (15) extends in a plane forming said angle with the orthogonal to the propagation direction.

5. The optical probe (10, 101, 102) according to any of the previous claims, **characterized in that** said light coupling means comprise at least one intermediate structure in between the facet (15) and the diffraction structure (14).

6. The optical probe (10, 101, 102) according to claim 5, **characterized in that** said at least one intermediate structure is made from a polymer (61).

7. The optical probe (10, 101, 102) according to any of the previous claims, **characterized in that** the diffraction structure (14) is a diffraction grating structure with a high refractive index contrast.

8. The optical probe (10, 101, 102) according to claim 7, **characterized in that** the diffraction grating structure (14) is a metal grating structure.

9. The optical probe (10, 101, 102) according to any of the previous claims, **characterized in that** said optical element (11) comprises an optical fiber wherein said light coupling means are located on a core (12) of the optical fiber.

10. A method for sending light into an optical waveguide on a substrate or for receiving light from an optical waveguide on a substrate, comprising the steps of:
(i) positioning an optical probe (10, 101, 102) in the vicinity of the waveguide, said optical probe (10, 101, 102) comprising an optical element (11) for guiding the light in a propagation direction, said optical element (11) having a facet (15) where the light enters or exits the optical element (11), and means for coupling the light between the optical element (11) and the waveguide, said means being formed on said facet (15) and comprising a diffraction structure (14); and
(ii) orienting the optical probe (10, 101, 102) such that the diffraction structure (14) extends substantially parallel to and at a predetermined distance from the waveguide, said predetermined distance being chosen in function of the required coupling efficiency.

11. The method according to claim 10, **characterized in that** the predetermined distance is between 0 nm and 100 nm.

12. The method according to any of claims 10 to 11, **characterized in that** step b comprises orienting the optical probe (10, 101, 102) with the propagation direction under a predetermined angle with respect to the orthogonal to the waveguide.

13. The method according to claim 12, **characterized in that** said predetermined angle is between 0 and 10 degrees.

14. A method for forming an optical structure (61) on a facet (15) of a core (12) of an optical element (11), the method comprising the steps of:
(a) providing a light curable material (41) in liquid form on a surface of a carrier (40, 401),
(b) positioning the optical element (11) with the facet (15) sufficiently close to the surface of the carrier (40, 401), such that the liquid material (41) substantially fills the space between the surface and the facet (15);
(c) curing the liquid material (41) by means of light for forming the optical structure (61) on the facet (15);
(d) separating the optical element (11) with the optical structure (61) from the carrier (40, 401),
**characterized in that** in step (c) the light is applied through the core (12) of the optical element (11).

15. The method according to claim 14, **characterized in that** a layer of material (441) is applied on the surface of the carrier (401) before applying the light curable material (41), said layer of material (441) being transferred to the optical structure (61) on the facet (15) in step (d).

16. The method according to claim 15, **characterized in that** the layer of material (441) is a patterned layer.

17. The method according to any of claims 14 to 16, **characterized in that** the surface of the carrier (401) comprises recessed areas and raised areas forming a negative of the optical structure (61) to be formed on the facet (15).

18. The method according to claim 17, **characterized in that** the layer of the material (441) on the surface is only present in the recessed areas.

19. The method according to any of claims 14 to 18, wherein the light curable material (41) is a UV-curable material and wherein curing the light curable material (41) comprises illuminating with UV light (43).

20. The method according to any of claims 14 to 19, wherein the optical element is an optical fiber (11).

21. The method according to any of claims 14 to 20, wherein the material (441) is a metal.

22. The method according to any of claims 14 to 21, wherein positioning the optical element (11) comprises orienting the optical element (11) such that the facet (15) forms a non-zero angle with the surface of the carrier (401).

23. The method according to any of claims 14 to 22, wherein the carrier (401) comprises an anti-sticking layer (71) on the surface.
